# EUROPEAN PATENT APPLICATION

(11) **EP 3 163 053 A1**
(43) Date of publication of application: **03.05.2017**
(21) Application number: 16190662.3
(22) Date of filing: 26.09.2016
(51) Int. Cl.: F02C 9/18, F01D 17/14, F04D 27/02, F04D 29/52, F02K 3/075, F01D 17/10

(54) **BLEED VALVE ARRANGEMENT FOR A GAS TURBINE ENGINE**

(30) Priority: 26.10.2015 GB 201518901
(71) Applicant: Rolls-Royce plc, London SW1E 6AT (GB)
(72) Inventor: Hussain, Zahid, Derby, Derbyshire DE24 8BJ (GB); Bewick, Clare, Derby, Derbyshire DE24 8BJ (GB); Peace, Richard, Derby, Derbyshire DE24 8BJ (GB)
(74) Representative: Rolls-Royce plc

(57) **Abstract**

A bleed valve arrangement for a gas turbine engine comprises a bleed valve housing defining a bleed duct through which a bleed flow may pass in use and a valve within the bleed duct operable between a closed position and an open position. The valve position is continuously variable between the closed position and the open position. The arrangement further comprises an ejection duct downstream of the bleed duct. The arrangement is characterised in that the ejection duct has a greater cross-sectional area than the bleed duct immediately downstream of the bleed duct so that the bleed flow experiences a sudden expansion on passing from the bleed duct into the ejection duct.

## Description

This disclosure relates to bleed valves for gas turbine engines.

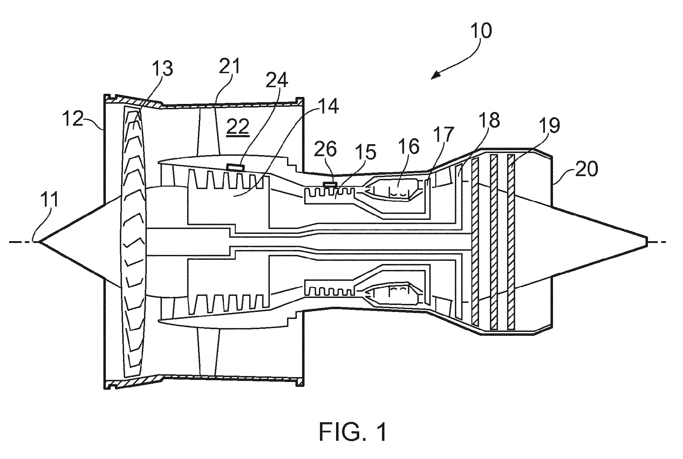

With reference to **Figure 1****,** a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. For example, an engine may have a different number of interconnecting shafts (e.g. two) or a different number of compressors or turbines.

Further, the engine may comprise a gearbox provided in the drive train from a turbine to a compressor or fan.

In order to manage the pressure ratio across the compressors 14, 15 away from their design operating conditions it may be beneficial to extract air from an intermediate position in the compressors 14, 15 via one or more bleed valves. When opened, such bleed valves divert a portion of the air flow from the core engine. The extracted air may be used to cool hot components of the engine, for example stator vanes and rotor blades of the turbines 17, 18, 19, provide case cooling for clearance control, or be dumped into the bypass duct 22 or overboard.

Whilst some bleed of air is desirable for pressure ratio management and to supply cooling applications, the amount of air bled through the bleed valves should be minimised as extracted air reduces the efficiency of the gas turbine engine 10 as it is not used as working gas. Where the gas turbine engine 10 powers an aircraft it is also beneficial to minimise bleed off-take because opening the bleed valves and flow through the bleed valves is noisy and therefore causes discomfort to passengers and those overflown by such an aircraft.

Conventional bleed valves are bi-stable, i.e. either open (and allowing bleed air to flow) or closed (and allowing no bleed air to flow). Such bleed valves have to have a larger flow area than desirable when in their open state in order that the available flow area remains sufficient when components of the gas turbine engine 10 have deteriorated. Thus engine efficiency when new is sacrificed to accommodate deterioration of the gas turbine engine 10 before maintenance activities.

It would be desirable to provide a more flexible control of bleed air flow, so that the amount of air extracted can be better matched to the operating conditions of the engine. This permits the engine to operate more efficiently.

Accordingly, the invention provides a bleed valve arrangement for a gas turbine engine as set out in the claims.

Embodiments of the invention will now be described in more detail, with reference to the attached drawings, in which
**Figure 1** shows a gas turbine engine, which has already been described;
**Figure 2** shows schematically a first arrangement of a bleed valve;
**Figure 3** shows schematically a second arrangement of a bleed valve;
**Figure 4** shows schematically a third arrangement of a bleed valve;
**Figure 5(a) and Figure 5(b)** are two views of bleed valves mounted on a casing of a gas turbine engine.

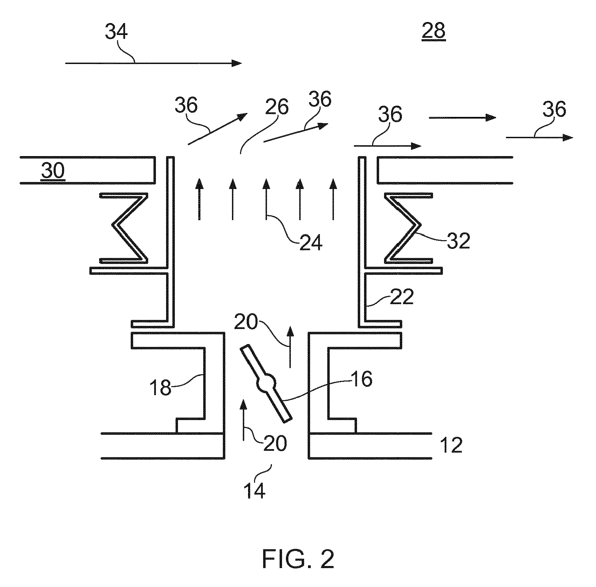

**Figure 2** shows schematically a first arrangement of a bleed valve. An annular engine casing 12 surrounds a core (not shown) of a gas turbine engine. A circular bleed aperture 14 permits bleed air to be extracted from the core. The bleed air flow will therefore generally flow in a radially outward direction, and references in this specification to terms such as 'upstream' and 'downstream' will assume this flow direction.

Radially outward and downstream of the bleed aperture 14 is a butterfly valve 16 mounted in a cylindrical housing 18 defining a bleed duct. The butterfly valve 16 is operable by a control system (not shown) to move between a closed position in which no bleed air may flow through the housing 18 and an open position in which the butterfly valve offers minimal obstruction to the flow of bleed air through the housing 18. The position of the butterfly valve 16 is continuously variable between these two extremes to permit any desired amount of bleed air 20 to be extracted from the core.

Radially outward and downstream of the housing 18 is a cylindrical ejection duct 22 through which the bleed air flows. The ejection duct 22 has a larger diameter (and therefore area) than the housing 18, so that the sudden expansion of the air flow 24 as it enters the ejection duct 22 reduces its velocity and pressure.

An opening 26 at the radially outer end of the ejection duct 22 allows the bleed air to flow into the annular bypass duct 28, which is bounded on its radially inner side by an annular bypass duct wall 30. A flexible seal 32 accommodates relative movement between the engine casing 12 and the bypass duct wall 30, and prevents the leakage of bypass air into the fire zone around the housing 18 or the leakage of fire zone ventilation air into the bypass duct 28.

Bypass air 34 flows through the bypass duct 26, and arrows 36 show how the bleed air flow 24 is deflected by the bypass duct flow 34 as it enters the bypass duct. Because the velocity and pressure of the bleed air flow has been reduced by the expansion into the ejection duct 22, it tends to remain attached to the radially inner bypass duct wall 30. This leads to a reduction in fan forcing, and minimises the reduction in fan working line margin.

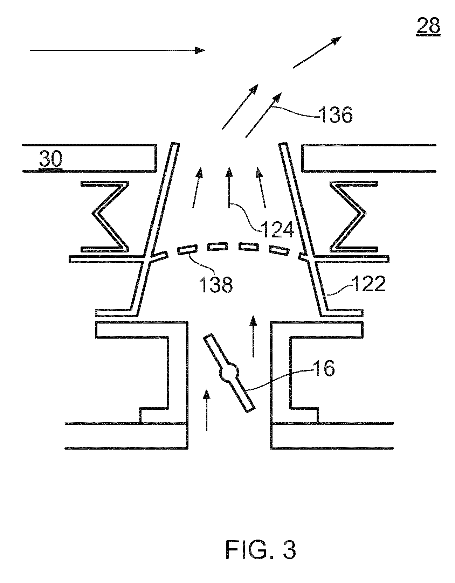

**Figure 3** shows schematically a second arrangement of a bleed valve. Some elements are essentially identical to those in the arrangement of Figure 2, and these are indicated by the same reference numbers.

In this arrangement, the ejection duct 122 has a larger diameter than the housing 18 immediately downstream of the housing, so that there is a sudden expansion of the air flow 124 as it enters the ejection duct 122. In contrast to Figure 2, though, the overall shape of the ejection duct 122 is frustoconical and forms a converging nozzle. The bleed flow 124 is therefore accelerated as it enters the bypass duct 26. This might be advantageous, for example, to ensure that the bleed air flow 136 partially or fully detaches from the inner wall 30 of the bypass duct 26, or to reduce a high pressure ratio across the valve 16 by introducing a pressure ratio across the ejection duct 122.

This arrangement may be of use if the flow temperature or pressure ratio is higher than expected, because it shares the pressure ratio between the valve 16 and the ejection duct 122 to reduce the maximum bleed air velocity within the device and thereby limit noise generation. By ensuring that the bleed air flow 136 separates from the inner wall 30 of the bypass duct thermal damage to that wall can be avoided.

The arrangement of Figure 3 also has a bolt catcher 138 in the ejector duct 122 to ensure that no debris can fall through the valve into the engine where it could potentially cause damage. (Such debris might be dropped by fitters maintaining the engine while mounted on the aircraft.) The total area of the holes in the bolt catcher 138 should ideally be larger than that of the valve 16 to ensure that the throat of the valve 16 controls the mass flow. If the bolt catcher 138 were to restrict the flow through the system, the valve 16 would have a reduced pressure ratio across it and would need to be larger and heavier to allow the required flow at this pressure ratio. This is undesirable. The diameter of the holes in the bolt catcher 138 should ideally be slightly smaller than the smallest piece of debris (e.g. bolt, nut, washer) that might be dropped: approximately 10mm.

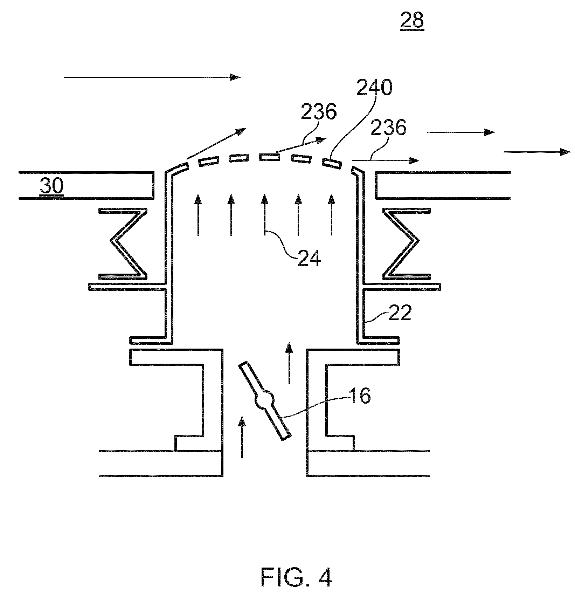

**Figure 4** shows schematically a third arrangement of a bleed valve. Some elements are essentially identical to those in the arrangement of Figure 2, and these are indicated by the same reference numbers.

In this arrangement the ejection duct 22 has a 'pepperpot' 240 where it meets the bypass duct 26. Pepperpots are typically used to reduce the noise of the bleed air 24 flowing into the bypass duct 26, and so they commonly have relatively small holes (approximately 3mm diameter). The pepperpot 240 could have a large flow area, so that the flow 236 exits without significant momentum and attaches to the inner wall; or it could have a smaller area, so that a significant pressure ratio is created across it. This latter arrangement could be used to ensure the flow detaches from the inner wall 30 (as in the arrangement of Figure 3) or to reduce the pressure ratio across the valve 16 in order to limit noise production.

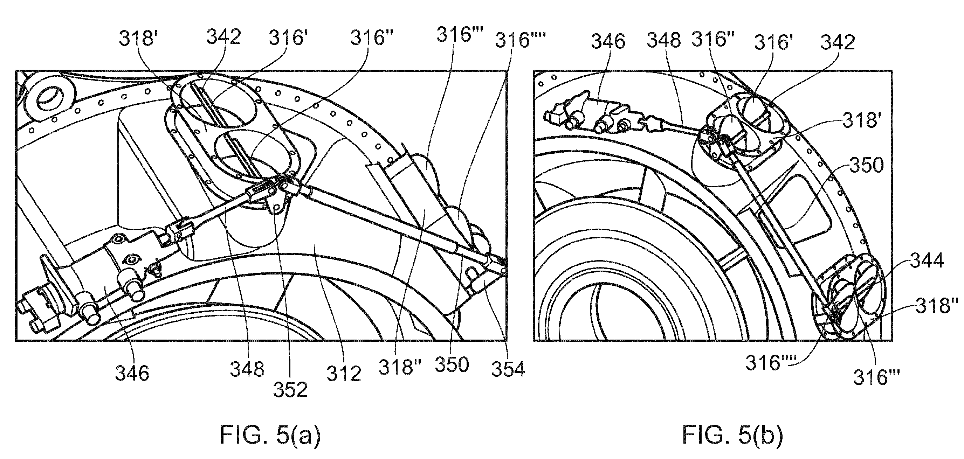

**Figure 5(a) and Figure 5(b)** are two views of a plurality of bleed valves mounted on a casing of a gas turbine engine. Some elements are essentially identical to those in the arrangement of Figure 2, and these are indicated by the same reference numbers.

Four butterfly valves 316 are mounted on a casing 312 of a gas turbine engine. Two valves 316', 316" are mounted on a first common axle 342 in a first housing 318' and the other two valves 316"', 316"" are mounted on a second common axle 344 in a second housing 318" circumferentially displaced from the first housing 318'. A similar arrangement is provided (but is not visible in Figures 5(a) and 5(b)) on the diametrically opposite side of the casing.

A linear actuator 346 is mounted on the casing 312. This is controlled by a bleed valve control system (not shown) and can be commanded to any desired position. The linear motion of the actuator 346 is transmitted through a linkage comprising actuator rods 348 and 350 which turn respective cranks 352 and 354. The cranks 352 and 354 are connected to the axles 342 and 344 so as to turn the butterfly valves 316 in response to the commanded movement of the actuator 346.

The geometry of the linkage may be arranged to provide any desired relationship between the movement of the linear actuator and the movement of the valves 316. For example, the movement of the valves 316 may be proportional to the movement of the actuator over its whole range; or the geometry of the linkage may be modified to convert a straightforward linear motion of the actuator into a non-linear movement of the valve. This could provide, for example, a progressive or otherwise non-linear response in the valves over the range of movement of the actuator.

In this way, the butterfly valves 316 can be moved in unison to any position between completely closed and completely open, to deliver the desired bleed air flow from the core of the gas turbine engine into the ejection duct.

It is also possible to arrange the geometry of the linkage to provide a desired relationship between the movement of the valves 316', 316" and the movement of the valves 316"', 316""; for example, one pair of valves may open faster than the other, or there may be a delay before one pair of valves begins to move either from its closed or from its open state.

A skilled person will recognise that other types of actuator, for example rotary actuators, may be used in place of the linear actuators described. Different numbers of actuators, and different arrangements of linkages, may also be used. In an arrangement such as that shown in Figure 5(a) and Figure 5(b), each of the plurality of bleed valves may be substantially identical, or the bleed valves may differ from one another.

It will be appreciated that the components of the described arrangements may be made from any suitable materials. In particular, the use of carbon-fibre or other composite materials may be advantageous.

It will be understood that the invention is not limited to the embodiments described above, and various modifications and improvements can be made without departing from the concepts described herein. Except where mutually exclusive, any of the features may be employed separately or in combination with any other features and the disclosure extends to and includes all combinations and sub-combinations of one or more features described herein.

The use of butterfly valves in the bleed valve arrangements described herein allow for higher bleed air flow rates, and thus enable higher efficiency engine design.

The efficiency of the engine design is also enhanced by the capability of these arrangements to modulate the bleed air flow, in contrast to known bleed valve arrangements which can only be open or closed. As well as allowing more precise control over bleed air flow, this modulation permits the various worst-case scenarios to be more easily accommodated and permits degradation to be compensated for during the engine's life.

## Claims

1. A bleed valve arrangement for a gas turbine engine, the arrangement comprising a bleed valve housing (18) defining a bleed duct through which a bleed flow may pass in use and a valve (16) within the bleed duct operable between a closed position and an open position, the valve position being continuously variable between the closed position and the open position, the arrangement further comprising an ejection duct (22) downstream of the bleed duct, **the arrangement characterised in that** immediately downstream of the bleed duct the ejection duct has a greater cross-sectional area than the bleed duct so that the bleed flow experiences a sudden expansion on passing from the bleed duct into the ejection duct.

2. The bleed valve arrangement of claim 1, in which the bleed valve is a butterfly valve.

3. The bleed valve arrangement of claim 1 or claim 2, in which the ejection duct is cylindrical.

4. The bleed valve arrangement of claim 1 or claim 2, in which the ejection duct (122) is convergent.

5. The bleed valve arrangement of any one of the preceding claims, in which the ejection duct (122) comprises a perforated bolt catcher (138).

6. The bleed valve arrangement of claim 5, in which the total area of the perforations in the bolt catcher is at least as large as the cross-sectional area of the bleed duct.

7. The bleed valve arrangement of any one of the preceding claims, in which the ejection duct comprises a perforated cover (240) at its exit.

8. The bleed valve arrangement of any one of the preceding claims, in which the bleed flow passes into a bypass duct of the gas turbine engine and in which the pressure of the bleed flow is less than two times the pressure of the flow in the bypass duct.

9. The bleed valve arrangement of claim 8, in which the pressure of the bleed flow is less than about 1.9 times the pressure of the flow in the bypass duct.

10. The bleed valve arrangement of any one of the preceding claims, in which the bleed flow is subsonic.

11. A gas turbine engine comprising a plurality of bleed valve arrangements (316, 318) according to any of the preceding claims.

12. The gas turbine engine of claim 11, in which the plurality of bleed valve arrangements are arranged in pairs.

13. The gas turbine engine of claim 11 or claim 12, in which the plurality of bleed valve arrangements are circumferentially spaced around a casing of the engine.

14. The gas turbine engine of any one of claims 11 to 13, in which the bleed valves are operated by at least one linear actuator (346).

15. The gas turbine engine of claim 14, in which each actuator operates more than one valve.
